# EUROPEAN PATENT APPLICATION

(11) **EP 4 848 766 A1**
(43) Date of publication of application: **02.12.2026**
(21) Application number: 24921773.8
(22) Date of filing: 19.12.2024
(51) Int. Cl.: H04W 8/14

(54) **ROAMING PROCESSING METHOD AND APPARATUS, AND STORAGE MEDIUM**

(30) Priority: 30.01.2024 CN 202410126082
(71) Applicant: ZTE CORPORATION, Shenzhen, Guangdong 518057 (CN)
(72) Inventor: SUN, Xuhong, Shenzhen, Guangdong 518057 (CN); WU, Yunfei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/140484
(87) International publication number: WO 2025/161751

(57) **Abstract**

The present disclosure relates to the technical field of communications, and in particular to a roaming processing method and apparatus, and a storage medium. The method is applied to a first master gateway and comprises: sending a first message to a second master gateway, wherein the first message is used for requesting state information of a target second slave gateway managed by the second master gateway, and the target second slave gateway is a roaming candidate slave gateway of a terminal; receiving a second message from the second master gateway, wherein the second message comprises the state information of the target second slave gateway; and on the basis of the second message, determining whether the terminal is allowed to access the target second slave gateway.

## Description

### CROSS-REFERENCE TO RELATED APPLICATIONS

This application claims priority to Chinese Patent Application No. 202410126082.8, entitled "ROAMING PROCESSING METHOD AND APPARATUS, AND STORAGE MEDIUM" filed with the CNIPA on January 30, 2024, which is incorporated herein by reference in its entirety.

### TECHNICAL FIELD

The present disclosure relates to the technical field of communications, in particular to a roaming processing method and apparatus, and a storage medium.

### BACKGROUND

Currently, a whole-home optical network method of fiber to the remote (FTTR) has been widely adopted. The whole-home optical network may be a wireless network including a plurality of gateways (or wireless access points) in a one-primary multi-secondary manner. Within the coverage area of the wireless network, a terminal may be supported for network roaming through network-side roaming steering.

However, in large-scale scenarios such as industrial parks and dormitory buildings, it is often necessary to deploy a large number of gateways to meet the requirements of the network coverage area. Moreover, given that hardware resources of a single primary gateway are often insufficient to meet service requirements, a plurality of gateways may be combined into a plurality of whole-home optical networks. In such cases, if a terminal moves across different networks, it becomes difficult to support network roaming of the terminal, which may easily lead to network disconnection on the terminal side.

### SUMMARY

Embodiments of the present application provide a roaming processing method and apparatus, and a storage medium.

In a first aspect, a roaming processing method is provided. The roaming processing method is performed by a first primary gateway and includes: sending a first message to a second primary gateway, where the first message is used to request state information of a target second secondary gateway managed by the second primary gateway, and the target second secondary gateway is a roaming candidate secondary gateway for a terminal; receiving a second message from the second primary gateway, where the second message includes the state information of the target second secondary gateway; and determining, based on the second message, whether the terminal is allowed to access the target second secondary gateway.

In another aspect, a roaming processing method is provided. The roaming processing method is performed by a second primary gateway and includes: receiving a first message from a first primary gateway, where the first primary gateway is configured to manage a target first secondary gateway to which a terminal is currently connected, the first message is used to request state information of a target second secondary gateway managed by the second primary gateway, and the target second secondary gateway is a roaming candidate secondary gateway for the terminal; and sending a second message to the first primary gateway, where the second message includes the state information of the target second secondary gateway.

In yet another aspect, a roaming processing apparatus is provided. The roaming processing apparatus is applied to a first primary gateway and includes: a sending module, a receiving module, and a determining module, where the sending module is configured to send a first message to a second primary gateway, the first message is used to request state information of a target second secondary gateway managed by the second primary gateway, and the target second secondary gateway is a roaming candidate secondary gateway for a terminal; the receiving module is configured to receive a second message from the second primary gateway, where the second message includes the state information of the target second secondary gateway; and the determining module is configured to determine, based on the second message, whether the terminal is allowed to access the target second secondary gateway.

In another aspect, a roaming processing apparatus is provided. The roaming processing apparatus is applied to a second primary gateway and includes: a receiving module and a sending module, where the receiving module is configured to receive a first message from a first primary gateway, the first primary gateway is configured to manage a target first secondary gateway to which a terminal is currently connected, the first message is used to request state information of a target second secondary gateway managed by the second primary gateway, and the target second secondary gateway is a roaming candidate secondary gateway for the terminal; and the sending module is configured to send a second message to the first primary gateway, where the second message includes the state information of the target second secondary gateway.

In another aspect, a communication apparatus is provided. The communication apparatus includes: a memory and a processor, where the memory and the processor are coupled; the memory is configured to store instructions executable by the processor; and the processor, when executing the instructions, performs the roaming processing method described in any one of the above embodiments.

In another aspect, a computer-readable storage medium is provided. The computer-readable storage medium stores computer instructions, and the computer instructions, when running on a computer, cause the computer to implement the roaming processing method described in any one of the above embodiments.

In another aspect, a computer program product is provided. The computer program product includes computer program instructions, and the computer program instructions, when executed by a processor, implement the roaming processing method described in any one of the above embodiments.

### BRIEF DESCRIPTION OF DRAWING(S)

In order to explain technical solutions of the present application more clearly, accompanying drawings that need to be used in some embodiments of the present application will be briefly introduced below. Apparently, the accompanying drawings described below are merely accompanying drawings of some embodiments of the present application, and those of ordinary skill in the art can also derive other drawings according to these accompanying drawings.
FIG. 1 is a schematic structural diagram of a networking system according to some embodiments of the present application.
FIG. 2 is a schematic structural diagram of a primary gateway according to some embodiments of the present application.
FIG. 3 is a schematic diagram of a message exchange process according to some embodiments of the present application.
FIG. 4 is a schematic flowchart of a roaming processing method according to some embodiments of the present application.
FIG. 5 is a schematic flowchart of another roaming processing method according to some embodiments of the present application.
FIG. 6 is a schematic flowchart of yet another roaming processing method according to some embodiments of the present application.
FIG. 7 is a schematic flowchart of yet another roaming processing method according to some embodiments of the present application.
FIG. 8 is a schematic flowchart of yet another roaming processing method according to some embodiments of the present application.
FIG. 9 is a schematic flowchart of yet another roaming processing method according to some embodiments of the present application.
FIG. 10 is a schematic flowchart of yet another roaming processing method according to some embodiments of the present application.
FIG. 11 is a schematic flowchart of yet another roaming processing method according to some embodiments of the present application.
FIG. 12 is a schematic structural diagram of a roaming processing apparatus according to some embodiments of the present application.
FIG. 13 is a schematic structural diagram of another roaming processing apparatus according to some embodiments of the present application.
FIG. 14 is a schematic structural diagram of yet another roaming processing apparatus according to some embodiments of the present application.

### DETAILED DESCRIPTION

Technical solutions in the present application will be clearly and completely described below in conjunction with accompanying drawings in the present application. Apparently, the described embodiments are merely some of the embodiments of the present application, not all of them. Based on the embodiments in the present application, all other embodiments obtained by those of ordinary skill in the art without making creative work belong to the scope of protection of the present application.

It should be noted that, in the present application, terms such as "exemplary" and "for example" are used to indicate examples, illustrations, or explanations. Any embodiment or design solution described as "exemplary" or "for example" in the present application should not be construed as being more preferred or advantageous than other embodiments or design solutions. Specifically, the use of the terms such as "exemplary" and "for example" is intended to present the relevant concepts in a concrete manner.

Hereinafter, the terms "first" and "second" are merely for descriptive purposes and cannot be understood as indicating or implying relative importance or implicitly specifying the quantity of technical features indicated. Therefore, features that are defined by "first" and "second" may explicitly or implicitly include one or more of the features.

In the description of the present application, unless otherwise specified, "/" denotes "or", for example, A/B may mean A or B. The term "and/or" used herein is merely a way to describe the relationship between related objects, indicating that three possible relationships may exist. For example, "A and/or B" may refer to the following three scenarios: A alone, A and B together, or B alone. Furthermore, "at least one" refers to one or more, and "a plurality of" refers to two or more.

With the rapid development of network access technologies, smart home networks have evolved to a whole-home optical network of FTTR. The whole-home optical network may establish a wireless network including a plurality of wireless access points (APs) to expand the wireless coverage area and network capacity. An AP may also be understood as a gateway with a Wi-Fi function. For example, the whole-home optical network may be a wireless network including a plurality of gateways in a one-primary multi-secondary manner. Within the coverage area of the wireless network, a terminal for network roaming is supported, so that users may be connected to the nearest AP at any time during free movement.

At present, network roaming of the terminal may generally be supported through two methods: autonomous decision-making on the terminal side and roaming steering on the network side. Autonomous decision-making on the terminal side refers to that the terminal autonomously monitors a current network state, and, upon sensing that the current network condition is poor, autonomously looks for a new AP and further autonomously switches to the new AP at an appropriate time. Roaming steering on the network side refers to that the network side monitors a network state of the terminal in real time and, upon detecting an AP more suitable for the terminal, sends a roaming steering instruction to the terminal, so as to steer the terminal to switch from the current AP to the more suitable AP without interrupting the network connection.

In comparison, the network side has a more comprehensive understanding of the entire network, and may more accurately determine the roaming timing of the terminal through network planning, network optimization and other methods, and select an AP that is more suitable for the terminal. That is, a primary gateway or a secondary gateway may determine a target secondary gateway the most suitable for the terminal based on real-time measurement information such as the signal strength of the terminal and load information of the secondary gateway, and send a roaming steering instruction to the terminal at the appropriate time to steer the terminal to roam and switch to the target secondary gateway, so that roaming steering is achieved.

However, in large-scale scenarios such as industrial parks and dormitory buildings, it is often necessary to deploy a large number of gateways to meet the requirements of the network coverage area. Moreover, given that hardware resources of a single primary gateway are often insufficient to meet service requirements, a plurality of gateways may be combined into a plurality of whole-home optical networks. In such cases, if a terminal moves across different networks, it becomes difficult to support network roaming of the terminal, which may easily lead to network disconnection on the terminal side.

To address the issue of frequent network interruptions that occur when a terminal moves across networks, an embodiment of the present application provides a roaming processing method. In a case where a target second secondary gateway in a second network is a roaming candidate secondary gateway for the terminal, a first primary gateway of a first network may send a first message to a second primary gateway of the second network, so as to request state information of the target second secondary gateway managed by the second primary gateway.

Based on this, in a case where the terminal moves from a current network (e.g., the first network) to another network (e.g., the second network), the present application may support a primary gateway of the current network to request state information of secondary gateways of primary gateways of other networks, so as to acquire the state information of the secondary gateways of other networks in time.

Subsequently, the first primary gateway may receive a second message from the second primary gateway. Since the second message carries the state information of the target second secondary gateway, based on the second message, the first primary gateway may determine whether to the terminal is allowed to access the target second secondary gateway, so as to effectively process roaming steering for the terminal.

Based on this, the present application may support the primary gateway of the current network to acquire information of the secondary gateways of other networks, so as to steer the terminal for cross-network roaming in time. This achieves seamless cross-network roaming steering in the whole-home optical network scenarios of FTTR, prevents service interruptions on the terminal side, and enhances the roaming experience of users. Therefore, the present application can be used to address the challenge of supporting the terminal for network roaming in cross-network mobility scenarios, thereby effectively preventing network interruptions on the terminal side.

In some embodiments of the present application, the roaming processing method may be applied to a first primary gateway in the networking system. The networking system provided by embodiments of the present application is described below.

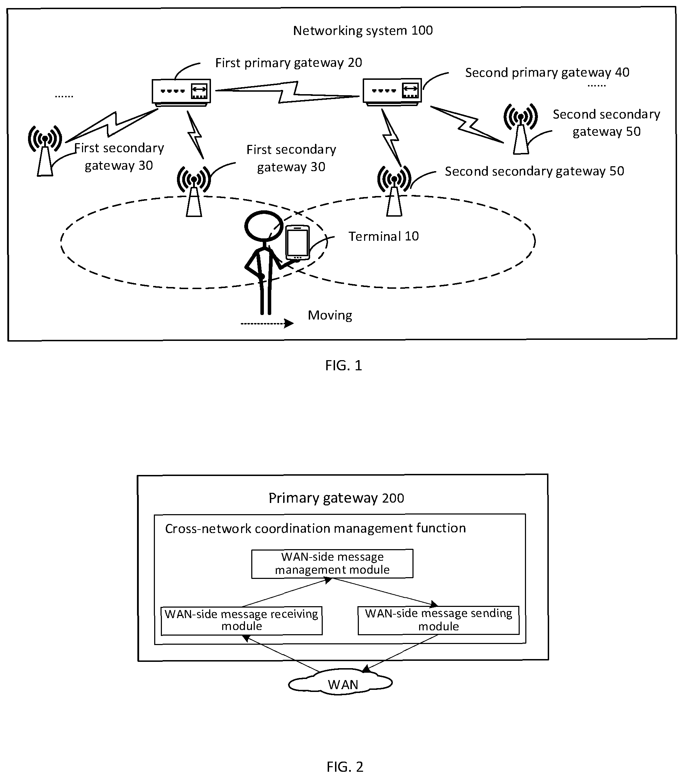

FIG. 1 is a schematic diagram of a networking system 100 according to embodiments of the present application. As shown in FIG. 1, the networking system 100 may include a terminal 10, a first primary gateway 20, a plurality of first secondary gateways 30, a second primary gateway 40, and a plurality of second secondary gateways 50.

The first primary gateway 20 and the second primary gateway 40 may be connected via a wired or wireless network. The first primary gateway 20 and the plurality of first secondary gateways 30 may form a first whole-home optical network (hereinafter referred to as a "first subnetwork"). The first primary gateway 20 may be connected to the plurality of first secondary gateways 30 through a splitter. The terminal 10 may be connected to any one of the plurality of first secondary gateways 30. This any one first secondary gateway 30 may also be referred to as a target first secondary gateway.

The second primary gateway 40 and the plurality of second secondary gateways 50 may also form a second whole-home optical network (hereinafter referred to as a "second subnetwork"). The second primary gateway 40 may be connected to the plurality of second secondary gateways 50 through a splitter. Any one of the plurality of second secondary gateways 50 may serve as a candidate roaming gateway for the terminal 10. This any one second secondary gateway 50 may also be referred to as a target second secondary gateway.

As shown in FIG. 1, the terminal 10 may move from a coverage area of a first secondary gateway 30 currently connected thereto to a coverage area of one second secondary gateway 50. In other words, the terminal 10 may move from the coverage area of the target first secondary gateway to the coverage area of the target second secondary gateway.

In practical applications, the networking system 100 shown in FIG. 1 may include a plurality of terminals, and primary gateways and secondary gateways of other networks. For example, the networking system 100 shown in FIG. 1 may further include a third primary gateway and a plurality of third secondary gateways of a third whole-home optical network, etc. For ease of understanding, the embodiments of the present application are described using an example where a networking system includes one terminal, and primary gateways and secondary gateways of two networks.

The terminal 10 in FIG. 1 may have a wireless network access function to support user access to the Internet. FIG. 1 shows an example of a device form of the terminal 10, but is not intended to limit the device form of the terminal 10.

Optionally, the terminal 10 may be user equipment (UE), an access terminal, a terminal unit, a subscriber station, a terminal station, a mobile station, a mobile, a remote station, a remote terminal, terminal equipment (TE), a mobile device, a wireless communication device, a terminal agent, a tablet computer, a handheld device with wireless communication functionality, a computing device or other processing device connected to a wireless modem, an in-vehicle device, an in-vehicle transceiver unit, a wearable device, or a terminal apparatus in a 5th generation (5G) mobile communication technology network or a public land mobile network (PLMN) evolved beyond 5G. The access terminal may be a cellular phone, a cordless phone, a session initiation protocol (SIP) phone, a wireless local loop (WLL) station, a personal digital assistant (PDA), a wireless terminal in a smart home, or the like.

The first primary gateway 20 and the second primary gateway 40 shown in FIG. 1 may have a roaming processing function and are used to steer the terminal for intra-network roaming or across-network roaming. Furthermore, the first primary gateway 20 and the second primary gateway 40 shown in FIG. 1 may also be used to connect to upper-layer network elements to support data exchange between the terminal and external networks.

The plurality of first secondary gateways 30 and the plurality of second secondary gateways 50 shown in FIG. 1 may have a Wi-Fi function and may be used to establish wireless connections with the terminal 10 to support the access of the terminal 10 to the external networks. For example, the plurality of first secondary gateways 30 may forward a message from the terminal 10 to the first primary gateway 20, and then the first primary gateway 20 forwards the message to an upper-layer network element, thereby achieving the access of the terminal 10 to the external networks. For another example, the plurality of second secondary gateways 50 may forward a message from the terminal 10 to the second primary gateway 40, and then the second primary gateway 40 forwards the message to an upper-layer network element, thereby achieving the access of the terminal 10 to the external networks.

Optionally, the first primary gateway 20 and the second primary gateway 40 may or may not have the Wi-Fi function in addition to the roaming processing function. In other words, while performing roaming steering, the first primary gateway 20 and the second primary gateway 40 may be deployed as APs to establish wireless connections with the terminal 10. Alternatively, the first primary gateway 20 and the second primary gateway 40 may not be deployed as APs but are dedicated to roaming steering. This is not limited in the embodiments of the present application.

For ease of understanding, some embodiments of the present application are described using an example where the first primary gateway 20 and the second primary gateway 40 do not have the Wi-Fi function.

In one possible implementation, the first primary gateway 20 and the second primary gateway 40 may exchange messages, so that the first primary gateway 20 acquires configuration information or state information, etc., of the second secondary gateways 50 in the second subnetwork, or so that the second primary gateway 40 acquires configuration information or state information, etc., of the first secondary gateways 30 in the first subnetwork.

For example, as shown in FIG. 2, a primary gateway 200 (e.g., the first primary gateway 20 or the second primary gateway 40) in the embodiments of the present application may be configured with a cross-network coordination management function to support coordination management of configuration information or state information, etc., of secondary gateways by the primary gateway. The cross-network coordination management function may be implemented via a wide area network (WAN)-side message receiving module, a WAN-side message management module, and a WAN-side message sending module.

The WAN-side message receiving module may be configured to receive a cross-subnetwork coordination management message from a WAN. The cross-subnetwork coordination management message may be sent by other primary gateways and is used for coordination management of the configuration information or state information, etc., of secondary gateways. For example, the cross-subnetwork coordination management message may be a first message, a second message, a third message, an eighth message, a ninth message or a tenth message. The WAN-side message management module may be configured to respond to the received cross-subnetwork coordination management message. Alternatively, the WAN-side message management module may further be configured to actively edit a cross-subnetwork coordination management message directed to other primary gateways. The WAN-side message sending module may be configured to send the cross-subnetwork coordination management message to other primary gateways in the WAN.

For example, the cross-subnetwork coordination management message may be the first message, which is used to acquire the state information of the target second secondary gateway in the second subnetwork. Thus, the first primary gateway 20 may actively edit the cross-subnetwork coordination management message through the WAN-side message management module, and send the cross-subnetwork coordination management message to the second primary gateway 40 through the WAN-side message sending module. Correspondingly, the second primary gateway 40 may receive the cross-subnetwork coordination management message from the first primary gateway 20 through the WAN-side message receiving module, respond to the received cross-subnetwork coordination management message through the WAN-side message management module, read the state information of the target second secondary gateway, and send the state information of the target second secondary gateway to the first primary gateway 20 through the WAN-side message sending module. Based on the exchange process, the first primary gateway 20 may acquire the state information of the target second secondary gateway.

Optionally, connection may be established between the first primary gateway 20 and the second primary gateway 40 based on a data link layer protocol to achieve connectivity of a data link layer. Alternatively, connection may also be established between the first primary gateway 20 and the second primary gateway 40 based on a network layer protocol to achieve connectivity of a network layer. This is not limited in the embodiments of the present application.

In one possible implementation, a primary gateway of each subnetwork in the networking system may be pre-configured with a preset message structure. The preset message structure may be used to indicate message structures of a plurality of messages during exchange of the primary gateways, and support information exchange between the primary gateways. For example, the preset message structure indicates the message structures of the first message, the second message, the third message, the eighth message, the ninth message, and the tenth message. The first primary gateway 20 may generate the first message based on the preset message structure. The second primary gateway may parse the first message based on the preset message structure.

In one possible implementation, with reference to FIG. 2, the preset message structure may be pre-configured in the WAN-side message management module of a primary gateway. For example, the first primary gateway 20 may process the received message based on the preset message structure through the configured WAN-side message management module, so as to determine a message type, a destination, and the like.

Optionally, the preset message structure may be defined based on the institute of electrical and electronics engineers (IEEE) 1905 protocols, or the Ethernet frame format, or the Internet protocol (IP), or other ways. This is not limited in the embodiments of the present application.

For example, the preset message structure may be defined based on the IEEE 1905 protocols. Six message types, including the first message, the second message, the third message, the eighth message, the ninth message and the tenth message, may be newly added to IEEE 1905 protocol messages for information exchange between primary gateways.

Classified by function type, the first message may be referred to as a roaming candidate secondary gateway real-time information request message, used to request real-time state information of the roaming candidate secondary gateway. The second message may be referred to as a roaming candidate secondary gateway real-time information report message, used to report the real-time state information of the roaming candidate secondary gateway. The third message may be referred to as a cross-subnet coordination management acknowledgment message, used to acknowledge receipt of relevant messages. The eighth message may be referred to as a subnet access point information request message, used to request information of all secondary gateways in other subnetworks. The ninth message may be referred to as a subnet access point information report message, used to request configuration information of all secondary gateways in the current subnetwork. The tenth message may be referred to as a subnet access point information change notification message, used to indicate updated configuration information of the secondary gateways in the current subnetwork.

The six types of messages may be newly defined 1905.1 messages. The message type, value, transmission type, and relay indicator field of the six types of messages are listed in Table 1 below. The transmission type may be unicast or unicast/multicast.

**Table 1**

| Message type | Value | Transmission type | Relay indicator field |
|---|---|---|---|
| Cross-subnet coordination management acknowledgment message | 0x1000 | Unicast | 0 |
| Subnet access point information change notification message | 0x1001 | Unicast/multicast | 0/1 |
| Subnet access point information request message | 0x1002 | Unicast/multicast | 0/1 |
| Subnet access point information report message | 0x1003 | Unicast | 0 |
| Roaming candidate secondary gateway real-time information request message | 0x1004 | Unicast | 0 |
| Roaming candidate secondary gateway real-time information report message | 0x1005 | Unicast | 0 |

As shown in Table 2 below, the specific structure of the six types of messages may include a destination media access control (MAC) address, a source MAC address, an Ethernet type 0x893A, a message version, a reserved field, a message type, a message identifier (ID), a fragment ID, a last fragment indicator, a relay indicator, a plurality of 1905.1 protocol type-length-values (TLVs), and a message end TLV. The field "message type" may be used to carry a value indicating a message.

For example, when the field "message type" is 0x1000, it may indicate that the message is the cross-subnet coordination management acknowledgment message.

When the field "message type" is 0x1001, it may indicate that the message is the subnet access point information change notification message.

When the field "message type" is 0x1002, it may indicate that the message is the subnet access point information request message.

When the field "message type" is 0x1003, it may indicate that the message is the subnet access point information report message.

When the field "message type" is 0x1004, it may indicate that the message is the roaming candidate secondary gateway real-time information request message.

When the field "message type" is 0x1005, it may indicate that the message is the roaming candidate secondary gateway real-time information report message.

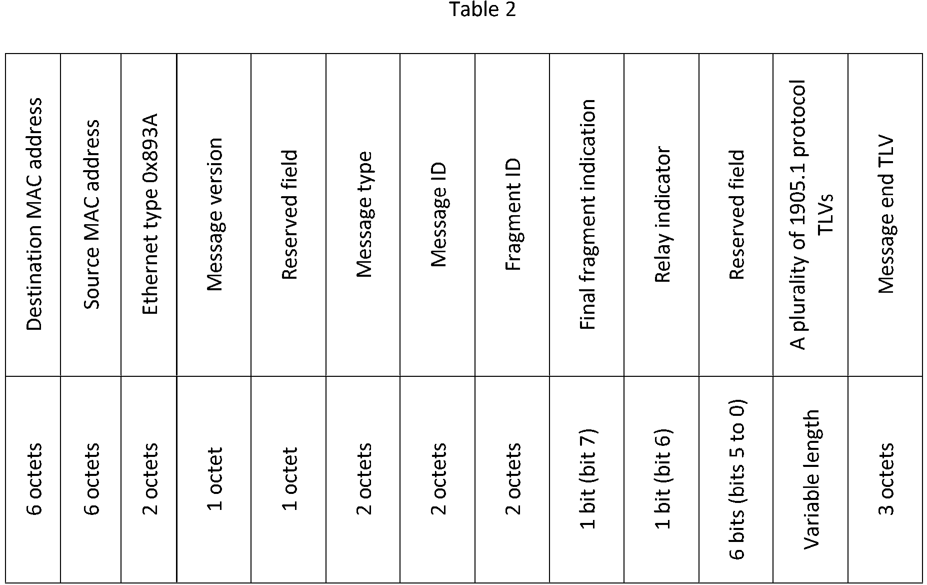

As shown in Table 3 below, to support information exchange between primary gateways, three new TLV structures may be defined in the newly defined 1905.1 messages.

In the subnet access point information report message, a subnet access point information report message TLV may be used to carry basic service set identifiers (BSSIDs) of all secondary gateways in the current subnetwork.

In the roaming candidate secondary gateway real-time information request message, a roaming candidate secondary gateway real-time information request TLV may be used to carry a BSSID of a roaming candidate secondary gateway to be queried.

In the roaming candidate secondary gateway real-time information report message, a roaming candidate secondary gateway real-time information report TLV may be used to carry current state information of the roaming candidate secondary gateway.

The current state information of the roaming candidate secondary gateway may include information relevant to roaming decisions of the roaming candidate secondary gateway, such as a working channel, an operating class, a band width, the quantity of associated users, a signal-to-noise ratio, and indication information for indicating whether to allow access of a new terminals.

**Table 3**

| TLV name | Value | Function |
|---|---|---|
| Subnet access point information report TLV | 0xF0 | Carrying BSSIDs of all secondary gateways of a current subnetwork |
| Roaming candidate secondary gateway real-time information request TLV | 0xF1 | Carrying a BSSID of a roaming candidate secondary gateway to be queried |
| Roaming candidate secondary gateway real-time information report TLV | 0xF2 | Carrying current state information of the roaming candidate secondary gateway |

Table 4 below shows an exemplary structure of the subnet access point information report TLV.

**Table 4**

| TLV type | TLV length | TLV value | | | | |
|---|---|---|---|---|---|---|
| 1 octet | 2 octets | 6*N +1 | | | | |
| 0xF0 | 1+6*N | Quantity of BSSID | BSSID 1 | BSSID 2 | ... | BSSID N |

Table 5 below shows an exemplary structure of the roaming candidate secondary gateway real-time information request TLV.

**Table 5**

| TLV type | TLV length | TLV value |
|---|---|---|
| 1 octet | 2 octets | 6 octets |
| 0xF1 | 6 | BSSID |

Table 6 below shows an exemplary structure of the roaming candidate secondary gateway real-time information report TLV. The value of the roaming candidate secondary gateway real-time information report TLV may be of a variable length and is used to carry information such as the BSSID, the channel number, the operating class, the band width and the quantity of wireless stations (STAs).

**Table 6**

| TLV type | TLV length | TLV value | | | | | |
|---|---|---|---|---|---|---|---|
| 1 octet | 2 octets | Variable length | | | | | |
| 0xF2 | Variable | BSSID | Channel number | Operating class | Band width | Quantity of wireless stations | ... |

Based on the six types of messages described above, the primary gateways may exchange information regarding the secondary gateways.

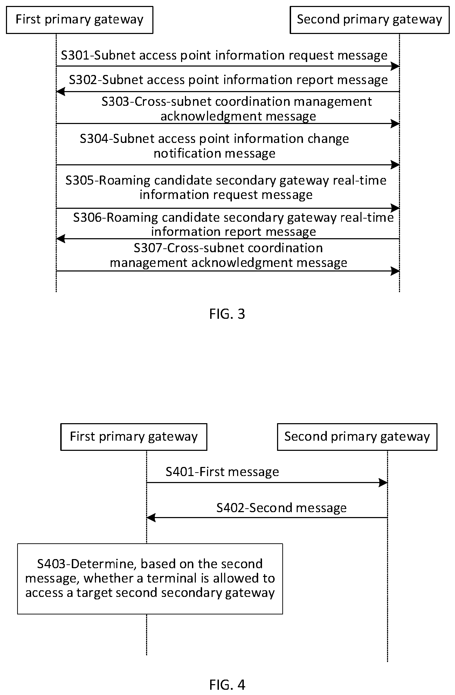

As shown in FIG. 3, FIG. 3 is a schematic diagram of a message exchange process between primary gateways according to embodiments of the present application. The message exchange process may include S301-S307.

In S301, the first primary gateway 20, upon being started up, may send the subnet access point information request message by means of groupcast (i.e., multicast) to other primary gateways in the networking system. Accordingly, the second primary gateway 40 may receive the subnet access point information request message from the first primary gateway 20.

In S302, in response to the subnet access point information request message, the second primary gateway 40 may send the subnet access point information report message to the first primary gateway 20 by means of unicast. Accordingly, the first primary gateway 20 may receive the subnet access point information report message from the second primary gateway 40.

In S303, in response to the subnet access point information report message, the first primary gateway 20 may send the cross-subnet coordination management acknowledgment message to the second primary gateway 40 by means of unicast. Accordingly, the second primary gateway 40 may receive the cross-subnet coordination management acknowledgment message from the first primary gateway 20.

In S304, upon a change in the secondary gateway in the first subnetwork (e.g., startup of the secondary gateway, addition of a new secondary gateway, or changes of configuration information), the first primary gateway 20 may send the subnet access point information change notification message to other primary gateways in the networking system by means of multicast. Accordingly, the second primary gateway 40 may receive the subnet access point information change notification message from the first primary gateway 20.

In S305, when performing cross-network roaming steering, the first primary gateway 20 may send the roaming candidate secondary gateway real-time information request message to a primary gateway of a subnetwork where a target secondary gateway is located by means of unicast. For example, when the target secondary gateway is a second secondary gateway, the first primary gateway 20 may send the roaming candidate secondary gateway real-time information request message to the second primary gateway 40 by means of unicast. Accordingly, the second primary gateway 40 may receive the roaming candidate secondary gateway real-time information request message from the first primary gateway 20.

In S306, in response to the roaming candidate secondary gateway real-time information request message, the second primary gateway 40 may send the roaming candidate secondary gateway real-time information report message to the first primary gateway 20 by means of unicast. Accordingly, the first primary gateway 20 may receive the roaming candidate secondary gateway real-time information report message from the second primary gateway 40.

In S307, in response to the roaming candidate secondary gateway real-time information report message, the first primary gateway 20 may send the cross-subnet coordination management acknowledgment message to the second primary gateway 40 by means of unicast. Accordingly, the second primary gateway 40 may receive the cross-subnet coordination management acknowledgment message from the first primary gateway 20.

The roaming processing method provided by the embodiments of the present application is described below in conjunction with the networking system shown in FIG. 1. FIG. 4 is a schematic flowchart of a roaming processing method according to embodiments of the present application. The method shown in FIG. 4 may be applied to the networking system shown in FIG. 1. As shown in FIG. 4, the roaming processing method may include: S401-S403.

In S401, a first primary gateway sends a first message to a second primary gateway.

Corresponding to the process of S401, the second primary gateway may receive the first message from the first primary gateway.

The first message may be used to request state information of a target second secondary gateway managed by the second primary gateway. The target second secondary gateway may be a roaming candidate secondary gateway for the terminal.

In one possible implementation, in conjunction with the application scenario shown in FIG. 1, the terminal may be within a coverage area of a target first secondary gateway in a first subnetwork and establish a wireless connection with the target first secondary gateway. The first subnetwork is a whole-home optical network including the first primary gateway and a plurality of first secondary gateways. The first primary gateway is used to manage the target first secondary gateway to which the terminal is currently connected. The target first secondary gateway is a first secondary gateway connected to the terminal among the plurality of first secondary gateways managed by the first primary gateway.

A user carrying the terminal may move from the coverage area of the target first secondary gateway to a coverage area of the target second secondary gateway in a second subnetwork, gradually moving away from the coverage area of the target first secondary gateway, i.e., gradually moving away from the first subnetwork. The second subnetwork is a whole-home optical network including the second primary gateway and a plurality of second secondary gateways. The target second secondary gateway is a second secondary gateway located on a movement path of the terminal among the plurality of second secondary gateways.

The first primary gateway may detect that the terminal is moving farther away through location tracking or by measuring a variation trend of channel strength, and determine to perform roaming steering on the terminal. In this case, the first primary gateway may interact with the terminal through the target first secondary gateway to acquire a list of optional access points within a reception range of the terminal. The list of optional access points may include information of secondary gateways measured by the terminal at a current location, such as the channel strength. For example, when the terminal is at the location shown in FIG. 1, the terminal may measure the target second secondary gateway. That is, the list of optional access points may include information of the target second secondary gateway, such as the channel strength.

Furthermore, the first primary gateway may parse the list of optional access points and determine that the target second secondary gateway is the roaming candidate secondary gateway for the terminal. Thus, the first primary gateway may send the first message to the second primary gateway to request the state information of the target second secondary gateway, so as to facilitate determining whether the terminal may be roaming-steered to the target second secondary gateway.

In one possible implementation, the target second secondary gateway may be a secondary gateway that meets a preset condition among roaming candidate secondary gateways in the vicinity of the terminal. The preset condition may include at least one of the following: a secondary gateway having the highest channel strength with the terminal, or a secondary gateway closest to the terminal.

For example, the first primary gateway may parse the list of optional access points to obtain information such as the channel strength of the plurality of roaming candidate secondary gateways including the target second secondary gateway, and compare the channel strength of the plurality of roaming candidate secondary gateways to determine the secondary gateway having the highest channel strength with the terminal as the target second secondary gateway, i.e., determine that the target second secondary gateway is the secondary gateway that meets the preset condition.

As another example, the first primary gateway may pre-store configuration information of secondary gateways of sub-networks in the networking system. The configuration information may include deployment location information of the secondary gateways. While the terminal sends the list of optional access points to the first primary gateway through the target first secondary gateway, the terminal may also send the current location information to the first primary gateway. After the first primary gateway identifies a plurality of roaming candidate secondary gateways by parsing the list of optional access points, the first primary gateway may read the pre-stored deployment location information of the plurality of roaming candidate secondary gateways and, in combination with the current location information of the terminal, determine distances between the plurality of roaming candidate secondary gateways and the terminal. Subsequently, the first primary gateway may compare the distances between the plurality of roaming candidate secondary gateways and the terminal to determine the secondary gateway closest to the terminal as the target second secondary gateway , that is, to determine that the target second secondary gateway is the secondary gateway that meets the preset condition.

In one possible implementation, the first message may include identification information of the target second secondary gateway. The identification information may be used to uniquely identify the target second secondary gateway. For example, the first message may be a roaming candidate secondary gateway real-time information request message, and a roaming candidate secondary gateway real-time information request TLV may be used to carry a BSSID of the target second secondary gateway. The BSSID may be used to uniquely identify an AP (i.e., a gateway) in a wireless local area network and may be generated based on an MAC address of the AP.

In one possible implementation, upon receiving the first message from the first primary gateway, the second primary gateway may parse the first message based on a preset message structure to obtain the BSSID of the target second secondary gateway, and determine that the first message is used to request the state information of the target second secondary gateway.

In S402, the second primary gateway sends a second message to the first primary gateway.

Corresponding to the process of S402, the first primary gateway may receive the second message from the second primary gateway.

The second message may include the state information of the target second secondary gateway.

The state information of the target second secondary gateway may include at least one of the following: a working channel, an operating class, a band width, the quantity of associated users, a signal-to-noise ratio, or indication information for indicating whether access of new terminals is allowed. The working channel may be used to indicate a wireless channel on which the target second secondary gateway is currently working. The operating class may be used to indicate the type of operation performed by the target second secondary gateway on channel information. The band width may be used to indicate the amount of data that the target second secondary gateway may transmit per unit of time. The quantity of associated users may be used to indicate the quantity of terminals connected to the target second secondary gateway. The signal-to-noise ratio may be used to indicate the current channel quality of the target second secondary gateway.

In one possible implementation, the second primary gateway may instruct the target second secondary gateway to measure and report current state information, so as to obtain the current state information of the target second secondary gateway. Subsequently, the second primary gateway may send the second message carrying the state information of the target second secondary gateway to the first primary gateway. For example, the second message may be a roaming candidate secondary gateway real-time information report message, and a roaming candidate secondary gateway real-time information report TLV may be used to carry the current state information of the target second secondary gateway.

In one possible implementation, the first message may also include a first message identifier (MID). The first MID may be used to uniquely identify the first message. The second primary gateway may parse the first message to obtain the first MID and add the first MID to the second message, so that the first primary gateway may determine that the second message is a response to the first message.

In one possible implementation, upon receiving the second message from the second primary gateway, the first primary gateway may parse an MID field in the second message to obtain the first MID and determine that the second message is a response to the first message. Subsequently, the first primary gateway may parse a TLV field in the second message to obtain the state information of the target second secondary gateway.

In S403, the first primary gateway determines, based on the second message, whether to the terminal is allowed to access the target second secondary gateway.

In one possible implementation, upon parsing the second message to obtain the state information of the target second secondary gateway, the first primary gateway may make a determination based on the state information of the target second secondary gateway to determine whether to the terminal is allowed to access the target second secondary gateway.

For example, in a case where indication information in the state information of the target second secondary gateway indicates that access of a new terminal is not allowed, the first primary gateway may determine not to allow the terminal to access the target second secondary gateway.

For another example, in a case where the indication information in the state information of the target second secondary gateway indicates that access of a new terminal is allowed, but the signal-to-noise ratio (SNR) in the state information of the target second secondary gateway is less than or equal to a preset signal-to-noise ratio threshold, the first primary gateway may determine not to allow the terminal to access the target second secondary gateway.

For yet another example, in a case where the indication information in the state information of the target second secondary gateway indicates that access of a new terminal is allowed, the first primary gateway may determine to allow the terminal to access the target second secondary gateway.

For yet another example, in a case where the indication information in the state information of the target second secondary gateway indicates that access of a new terminal is allowed, and the signal-to-noise ratio (SNR) in the state information of the target second secondary gateway is greater than the preset signal-to-noise ratio threshold, the first primary gateway may determine to allow the terminal to access the target second secondary gateway.

Based on this, the present application may support the primary gateway of the current network to acquire information of the secondary gateways of other networks, so as to steer the terminal for cross-network roaming in time. This achieves seamless cross-network roaming steering in the whole-home optical network scenarios of FTTR, prevents service interruptions on the terminal side, and enhances the roaming experience of users. Therefore, the present application can be used to address the challenge of supporting the terminal for network roaming in cross-network mobility scenarios, thereby effectively preventing network interruptions on the terminal side.

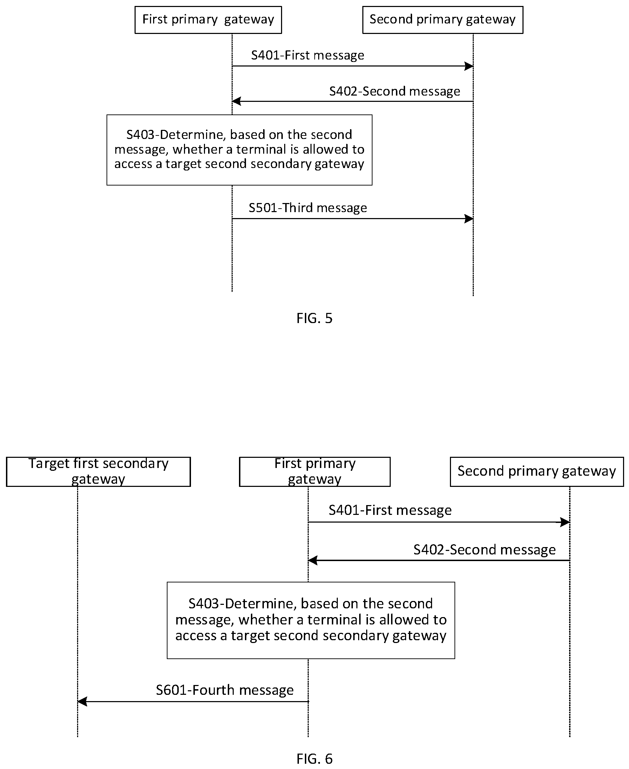

In one embodiment, with reference to FIG. 4, following S402 above, that is, after the second primary gateway sends the second message to the first primary gateway, as shown in FIG. 5, the roaming processing method provided by the embodiments of the present application may further include: S501.

In S501, the first primary gateway sends a third message to the second primary gateway.

Corresponding to the process of S501, the second primary gateway may receive the third message sent by the first primary gateway.

The third message may be used to acknowledge receipt of the second message.

In one possible implementation, after receiving the second message, the first primary gateway may send the third message to the second primary gateway. Furthermore, the first primary gateway may add the first MID to the third message, to enable the second primary gateway to determine that the third message is a response to the second message, thereby indicating that the first primary gateway receives the second message and preventing the second primary gateway from retransmitting the second message.

Accordingly, the second primary gateway may receive the third message sent by the first primary gateway and parse the third message to obtain relevant information, so as to determine that the first primary gateway receives the second message.

For example, the second message may be the cross-subnet coordination management acknowledgment message shown in Table 1 above. Referring to Table 2 above, after receiving the third message, the second primary gateway may parse the third message to obtain that the value of the field "message type" is 0x1000 and the value of the field "message ID" is the first MID, so that it is determined that the third message is the cross-subnet coordination management acknowledgment message and used to acknowledge receipt of the second message.

Optionally, the step numbers listed above do not define the order in which S403 and S501 are executed. For example, S403 may be executed before S501, after S501, or simultaneously with S501. This is not limited in the embodiments of the present application.

In one embodiment, with reference to FIG. 4, following S403 above, that is, after the first primary gateway determines, based on the second message, whether to the terminal is allowed to access the target second secondary gateway, as shown in FIG. 6, the roaming processing method provided by the embodiments of the present application may further include: S601.

In S601, in a case where the terminal is allowed to access the target second secondary gateway, the first primary gateway sends a fourth message to the target first secondary gateway.

The fourth message may be used to instruct the terminal to access the target second secondary gateway.

In one possible implementation, in a case where the terminal is allowed to access the target second secondary gateway, the first primary gateway may send the fourth message to the target first secondary gateway to facilitate the roaming processing of switching the terminal from the target first secondary gateway to the target second secondary gateway. The fourth message may include the working channel of the target second secondary gateway, and the indication information used to instruct the terminal to access the target second secondary gateway.

The target first secondary gateway may receive the fourth message from the first primary gateway and forward the information included in the fourth message to the terminal. Accordingly, the terminal may receive the information in the fourth message from the target first secondary gateway, disconnect from the target first secondary gateway, and establish a connection with the target second secondary gateway.

Alternatively, after forwarding the information in the fourth message to the terminal, the target first secondary gateway may also actively disconnect from the terminal. After receiving the information in the fourth message from the target first secondary gateway, the terminal may establish a connection with the target second secondary gateway.

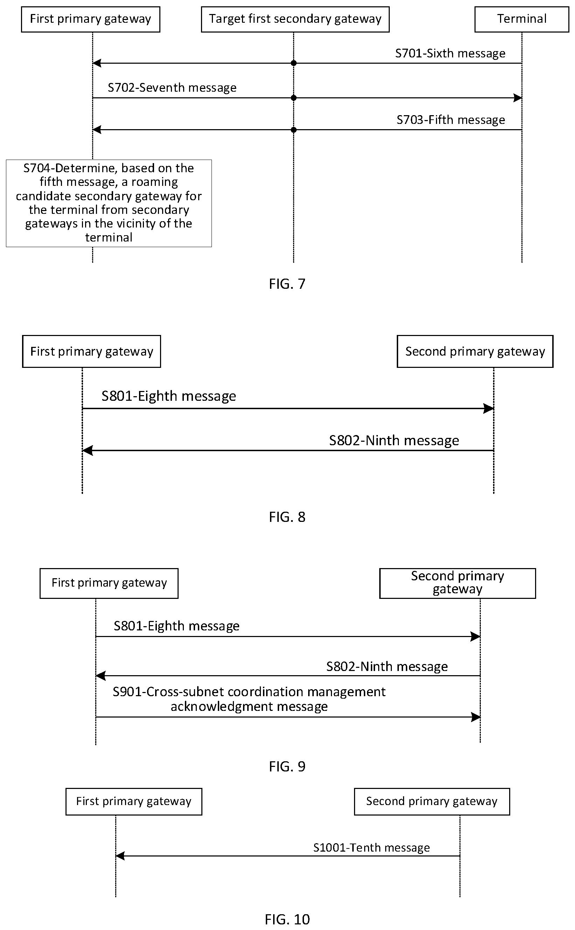

In one embodiment, to support the first primary gateway in determining whether roaming steering is required for the terminal, and to support the first primary gateway in determining the roaming candidate secondary gateways of the terminal, prior to the first primary gateway sending the first message to the second primary gateway, as shown in FIG. 7, the roaming processing method provided by the embodiments of the present application further includes: S701-S704.

In S701, the first primary gateway receives a sixth message sent by the terminal through the target first secondary gateway.

The sixth message may be used to indicate the channel strength between the terminal and the target first secondary gateway. The channel strength may be used to characterize the transmission quality, etc. of a wireless communication channel between the terminal and the target first secondary gateway.

In one possible implementation, the terminal may measure the channel strength with the target first secondary gateway in real time or periodically, add the measured channel strength with the target first secondary gateway into the sixth message, and send the sixth message to the first primary gateway through the target first secondary gateway. Accordingly, the first primary gateway may receive the sixth message sent by the terminal through the target first secondary gateway and parse the sixth message to obtain the channel strength between the terminal and the target first secondary gateway.

In S702, in a case where the channel strength between the terminal and the target first secondary gateway is less than or equal to a first threshold, the first primary gateway sends a seventh message to the terminal through the target first secondary gateway.

The seventh message may be used to instruct the terminal to measure the channel strength of secondary gateways in the vicinity of the terminal, that is, to instruct the terminal to measure the channel strength of secondary gateways within an access range.

The first threshold may be preset in the first primary gateway, and used to determine whether the channel strength between the terminal and a secondary gateway is sufficient to support communication services of the terminal.

In one possible implementation, the first primary gateway may compare the channel strength between the terminal and the target first secondary gateway with the first threshold.

In a case where the channel strength between the terminal and the target first secondary gateway is greater than the first threshold, it may indicate that the channel strength between the terminal and the target first secondary gateway is sufficient to support the communication services of the terminal, and there is no need to switch the terminal to another secondary gateway. In this case, the first primary gateway may determine that roaming steering for the terminal is not required.

In a case where the channel strength between the terminal and the target first secondary gateway is less than or equal to the first threshold, it may indicate that the channel strength between the terminal and the target first secondary gateway is insufficient to support the communication services of the terminal, and the terminal needs to be switched to another secondary gateway. In this case, the first primary gateway may determine that roaming steering is required for the terminal, and send the seventh message to the terminal through the target first secondary gateway to obtain the roaming candidate secondary gateway for the terminal.

In S703, the first primary gateway receives the fifth message sent by the terminal through the target first secondary gateway.

The fifth message may be used to indicate the channel strength of the secondary gateways in the vicinity of the terminal.

In one possible implementation, the terminal may receive the seventh message sent by the first primary gateway through the target first secondary gateway, and may measure the channel strength of the surrounding secondary gateways in response to the seventh message. Subsequently, the terminal may add the measured channel strength of the surrounding secondary gateways into the fifth message and send the fifth message to the first primary gateway through the target first secondary gateway. Accordingly, the first primary gateway may receive the fifth message sent by the terminal through the target first secondary gateway and parse the fifth message to obtain the channel strength of the secondary gateways in the vicinity of the terminal.

In S704, the first primary gateway determines, based on the fifth message, the roaming candidate secondary gateway for the terminal among the secondary gateways in the vicinity of the terminal.

In one possible implementation, the first primary gateway may compare the channel strength of the secondary gateways in the vicinity of the terminal, as included in the fifth message, with a second threshold, and identify a secondary gateway with the channel strength greater than the second threshold as the roaming candidate secondary gateway for the terminal. The second threshold may be preset in the first primary gateway, and used to identify secondary gateways with channel strength meeting requirements of the communication services of the terminal.

In one possible implementation, in a case where the number of the roaming candidate secondary gateways for the terminal is two or more, the first primary gateway may further filter the roaming candidate secondary gateways based on preset conditions to obtain the optimal roaming candidate secondary gateway. The process may be referenced in the description of S401 and will not be repeated here.

In one embodiment, primary gateways in the networking system may exchange messages to achieve coordination management of secondary gateways. The following illustrates the coordination management process of the secondary gateways, using the message exchange process between the first primary gateway and the second primary gateway shown in FIG. 8 as an example. As shown in FIG. 8, the roaming processing method provided by the embodiments of the present application further includes: S801-S802.

In S801, the first primary gateway sends an eighth message to the second primary gateway.

Corresponding to the process of S801, the second primary gateway receives the eighth message sent by the first primary gateway.

The eighth message may be used to request configuration information of the second secondary gateway managed by the second primary gateway.

In one possible implementation, after the first primary gateway powers on and starts up, the first primary gateway may multicast the eighth message to primary gateways of other subnetworks in the networking system to obtain configuration information of the secondary gateways in other subnetworks, thereby establishing a complete list of secondary gateway information and obtaining access point information in the networking system.

For example, with reference to FIG. 2, the first primary gateway may detect its own power-up via the configured WAN-side message management module, send the eighth message (i.e., a subnet access point information request message) to the WAN-side by means of multicast through a configured WAN-side message sending module, and wait through a configured WAN-side message receiving module for the ninth message (i.e., a subnet access point information report message) sent over the WAN-side by the primary gateways of other subnetworks. In this scenario, the second primary gateway may receive the eighth message from the first primary gateway through the configured WAN-side message receiving module.

In S802, the second primary gateway sends the ninth message to the first primary gateway.

Corresponding to the process of S802, the first primary gateway receives the ninth message sent by the second primary gateway.

The ninth message may include the configuration information of the second secondary gateways which are managed by the second primary gateway. The configuration information of the second secondary gateways may include the BSSIDs of the second secondary gateways.

In one possible implementation, upon receiving the eighth message from the first primary gateway, the second primary gateway may, in response to the eighth message, read the configuration information of each second secondary gateway managed by the second primary gateway and send the ninth message to the first primary gateway by means of unicast. Accordingly, the first primary gateway may receive the ninth message sent by the second primary gateway, and parse the ninth message to obtain the configuration information of each second secondary gateway.

For example, with reference to FIG. 2, upon receiving the eighth message from the first primary gateway through the configured WAN-side message receiving module, the second primary gateway may verify the eighth message through the configured WAN-side message management module.

If it is verified that the eighth message conforms to the message structure defined for the subnet access point information request message in the preset message structure, and the MID in the eighth message is the same as a previously received subnet access point information request message, it may indicate that the eighth message is a duplicate, and the second primary gateway may determine that the verification fails and discard the eighth message. If it is verified that the eighth message does not conform to the message structure defined for any of the message types in the preset message structure, it may indicate that the eighth message is an anomalous message, and the second primary gateway may also determine that the verification fails and discard the eighth message.

If it is verified that the eighth message conforms to the message structure defined for the subnet access point information request message in the preset message structure, and the MID in the eighth message is different from the previously received subnet access point information request message, the second primary gateway may determine that the verification is successful, construct the ninth message through the configured WAN-side message management module, and send the ninth message via unicast to the first primary gateway through the configured WAN-side message sending module. Correspondingly, the first primary gateway may receive the ninth message from the second primary gateway through the configured WAN-side message receiving module and verify the ninth message through the configured WAN-side message management module. If the verification is successful, the first primary gateway may parse the ninth message through the configured WAN-side message management module to obtain the configuration information of each second secondary gateway.

In one possible implementation, the second primary gateway may add the MID which is carried in the eighth message to the ninth message, so that the first primary gateway may determine that the ninth message is a response to the eighth message.

Based on the process of S801-S802, the first primary gateway may acquire static configuration information of the secondary gateways (i.e., the second secondary gateways) in the second subnetwork and establish a list of secondary gateway information of the second subnetwork to support the coordination management of the secondary gateways in the second subnetwork. Subsequently, in a case where it is necessary to guide the terminal roaming to a secondary gateway in the second subnetwork, the first primary gateway may, based on the above process of S401-S402, acquire real-time state information of the secondary gateways in the second subnetwork to make effective roaming decisions.

In one optional embodiment, following S802 above, that is, after the second primary gateway sends the ninth message to the first primary gateway, as shown in FIG. 9, the roaming processing method provided by the embodiments of the present application may further include: S901.

In S901, the first primary gateway sends a cross-subnet coordination management acknowledgment message to the second primary gateway.

In one possible implementation, with reference to FIG. 2, in a case where the first primary gateway determines that the ninth message passes the verification through the configured WAN-side message management module, the first primary gateway may send the cross-subnet coordination management acknowledgment message to the second primary gateway through the configured WAN-side message sending module. The cross-subnet coordination management acknowledgment message may carry the MID the same as those of the eighth message and the ninth message, so that the second primary gateway may confirm that the first primary gateway receives the ninth message.

In one embodiment, in a case where a secondary gateway configured in the networking system changes, the primary gateway of the corresponding subnetwork may send a subnet access point information change notification message to primary gateways of other subnetworks by means of multicast. The subnet access point information change notification message may carry updated configuration information to enable other primary gateways to establish a complete list of secondary gateway information. The following illustrates an information change notification process of the secondary gateway, using the message exchange process between the first primary gateway and the second primary gateway shown in FIG. 10 as an example. As shown in FIG. 10, the roaming processing method provided by the embodiments of the present application further includes: S1001.

In S1001, the second primary gateway sends a tenth message to the first primary gateway.

Corresponding to the process of S1001, the first primary gateway receives the tenth message sent by the second primary gateway.

The tenth message may include the updated configuration information of the second secondary gateways.

In one possible implementation, in a case where the originally configured second secondary gateway is powered on and started up , or the configuration information of the originally configured second secondary gateway is updated, or a new second secondary gateway is added to the second subnetwork, the second primary gateway may determine that the second secondary gateways in the second sub-network are changed, and the tenth message is sent to other primary gateways in the networking system by means of multicast. Accordingly, the first primary gateway may receive the tenth message sent by the second primary gateway.

For example, with reference to FIG. 2, the second primary gateway may determine, through the configured WAN-side message management module, whether the second secondary gateway in the second subnetwork is changed. Furthermore, upon determining that the second secondary gateway in the second subnetwork is changed, the second primary gateway can construct, through the configured WAN-side message management module, the subnet access point information change notification message (i.e., the tenth message) and send the subnet access point information change notification message to the WAN side by means of multicast through the configured WAN-side message sending module. Correspondingly, the first primary gateway may receive, through the configured WAN-side message receiving module, the subnet access point information change notification message sent by the second primary gateway. The subnet access point information change notification message may carry the BSSID information of the second primary gateway and each of the second secondary gateways via subnet access point information report TLVs.

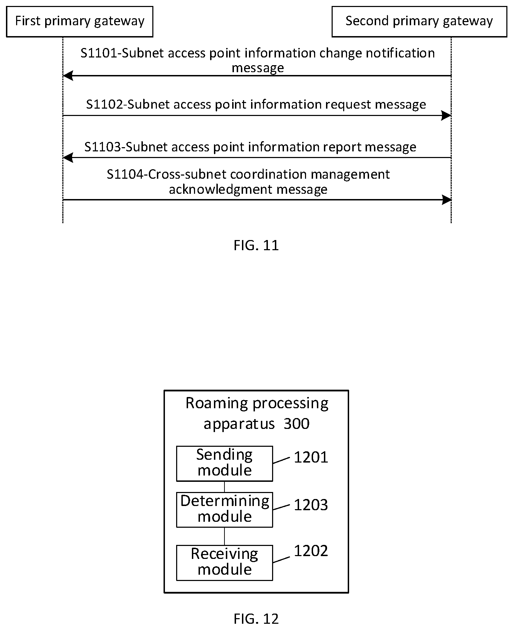

In one embodiment, in a case where a secondary gateway configured in the networking system changes, the primary gateway of the corresponding subnetwork may send a subnet access point information change notification message to primary gateways of other subnetworks by means of multicast. The subnet access point information change notification message may not carry updated configuration information. Upon receiving the subnet access point information change notification message, the primary gateways of other subnetworks may request the updated configuration information from the primary gateway that sends the subnet access point information change notification message, so as to establish a complete list of secondary gateway information. The following illustrates an information change notification process of the secondary gateway, using the message exchange process between the first primary gateway and the second primary gateway shown in FIG. 11 as an example. As shown in FIG. 11, the roaming processing method provided by the embodiments of the present application further includes: S1101-S1104.

In S1101, the second primary gateway sends a subnet access point information change notification message to the first primary gateway.

Corresponding to the process of S1101, the first primary gateway receives the subnet access point information change notification message sent by the second primary gateway.

The subnet access point information change notification message may be used to notify an update of the configuration information of the second secondary gateway in the second subnetwork, without carrying the updated configuration information of the second secondary gateway.

In one possible implementation, in a case where the second primary gateway determines that a second secondary gateway in the second subnetwork is changed, the second primary gateway may send the subnet access point information change notification message to other primary gateways in the networking system by means of multicast. Accordingly, the first primary gateway may receive the subnet access point information change notification message sent by the second primary gateway.

In S1102, the first primary gateway sends a subnet access point information request message to the second primary gateway.

Corresponding to the process of S1102, the second primary gateway receives the subnet access point information request message sent by the first primary gateway.

In one possible implementation, upon receiving the subnet access point information change notification message from the second primary gateway, the first primary gateway may send the subnet access point information request message to the second primary gateway by means of unicast to request the updated configuration information of the second secondary gateways. Accordingly, the second primary gateway may receive the subnet access point information request message sent by the first primary gateway.

In S1103, the second primary gateway sends a subnet access point information report message to the first primary gateway.

Corresponding to the process of S1103, the first primary gateway receives the subnet access point information report message sent by the second primary gateway.

In one possible implementation, with reference to FIG. 2, upon receiving the subnet access point information request message from the first primary gateway through the configured WAN-side message receiving module, the second primary gateway may verify the subnet access point information request message through the configured WAN-side message management module. If the verification is successful, the second primary gateway may construct the subnet access point information report message through the configured WAN-side message management module and unicast the subnet access point information report message to the first primary gateway.

The subnet access point information report message may carry the updated configuration information of the second secondary gateways, and the BSSID information of the second primary gateway and the plurality of second secondary gateways may be carried through subnet access point information report TLVs. Moreover, the subnet access point information report message may carry the same MID as the subnet access point information request message.

In S1104, the first primary gateway sends a cross-subnet coordination management acknowledgment message to the second primary gateway.

Corresponding to the process of S1104, the second primary gateway receives the cross-subnet coordination management acknowledgment message sent by the first primary gateway.

In one possible implementation, with reference to FIG. 2, the first primary gateway may receive, through the configured WAN-side message receiving module, the subnet access point information report message sent by the second primary gateway, and may verify the subnet access point information report message through the configured WAN-side message management module. If the verification is successful, the first primary gateway may reply to the second primary gateway with the cross-subnet coordination management acknowledgment message. The cross-subnet coordination management acknowledgment message may carry the same MID as the subnet access point information report message.

It should be understood that, in order to implement the above functions, the primary gateways (e.g., the first primary gateway and the second primary gateway) in the networking system include hardware structures and/or software modules corresponding to the execution of each function. Those skilled in the art will readily recognize that, in combination with the algorithmic steps described in various examples of the embodiments of the present application, the present application can be implemented in the form of hardware or a combination of hardware and computer software. Whether a function is performed by hardware or computer software driving hardware depends on the specific application and design constraints of the technical solutions. Those skilled in the art may use different methods to implement the described functions for each particular application, but it shall not be considered that the implementation goes beyond the scope of the present application.

In the embodiments of the present application, the functional modules of the primary gateways in the networking system may be divided according to the aforementioned method embodiments. For example, a separate functional module may be assigned to each function, or two or more functions may be integrated into a single functional module. The aforementioned integrated modules may be implemented either in hardware or in software. It should be noted that the division of modules in the embodiments of the present application is illustrative and represents merely a logical functional division, and other division methods may be used in actual implementation. The following explanation uses the example of dividing each function into a separate functional module.

In a case where functional modules are divided to correspond to each function in software, FIG. 12 is a schematic structural diagram of a roaming processing apparatus 300. As shown in FIG. 12, the roaming processing apparatus 300 may include: a sending module 1201, a receiving module 1202, and a determining module 1203. The roaming processing apparatus 300 may be applied to a first primary gateway in a networking system to perform the roaming processing method performed by the first primary gateway in the above method embodiment.

The sending module 1201 is configured to send a first message to a second primary gateway, where the first message is used to request state information of a target second secondary gateway managed by the second primary gateway, and the target second secondary gateway is a roaming candidate secondary gateway for a terminal.

The receiving module 1202 is configured to receive a second message from the second primary gateway, where the second message includes the state information of the target second secondary gateway.

The determining module 1203 is configured to determine, based on the second message, whether the terminal is allowed to access the target second secondary gateway.

In one possible embodiment, the first message includes: identification information of the target second secondary gateway.

In one possible embodiment, the state information of the target second secondary gateway includes at least one of the following: a working channel, an operating class, a band width, the quantity of associated users, a signal-to-noise ratio, or indication information for indicating whether access of new terminals is allowed.

In one possible embodiment, the sending module 1201 is further configured to send a third message to the second primary gateway, where the third message is used to acknowledge receipt of the second message.

In one possible embodiment, the sending module 1201 is further configured to send, a fourth message to a target first secondary gateway in a case where the terminal is allowed to access the target second secondary gateway,, where the fourth message is used to instruct the terminal to access the target second secondary gateway, and the target first secondary gateway is a secondary gateway connected to the terminal among first secondary gateways managed by the first primary gateway.

In one possible embodiment, the target second secondary gateway is a secondary gateway that meets a preset condition among roaming candidate secondary gateways in the vicinity of the terminal, where the preset condition includes at least one of the following: a secondary gateway closest to the terminal; or a secondary gateway having the highest channel strength with the terminal.

In one possible embodiment, the receiving module 1202 is further configured to receive a fifth message from the terminal through a target first secondary gateway, where the fifth message is used to indicate channel strength of secondary gateways in the vicinity of the terminal, and the target first secondary gateway is a secondary gateway connected to the terminal among first secondary gateways managed by the first primary gateway.

The determining module 1203 is further configured to determine, based on the fifth message, a roaming candidate secondary gateway for the terminal from the secondary gateways in the vicinity of the terminal.

In one possible embodiment, the receiving module 1202 is further configured to receive a sixth message from the terminal through the target first secondary gateway, where the sixth message is used to indicate channel strength between the terminal and the target first secondary gateway.

The sending module 1201 is further configured to send, in a case where the channel strength between the terminal and the target first secondary gateway is less than or equal to a first threshold, a seventh message to the terminal through the target first secondary gateway, where the seventh message is used to instruct the terminal to measure the channel strength of the secondary gateways in the vicinity of the terminal.

In one possible embodiment, the sending module 1201 is further configured to send an eighth message to the second primary gateway, where the eighth message is used to request configuration information of second secondary gateways which are managed by the second primary gateway.

The receiving module 1202 is further configured to receive a ninth message sent by the second primary gateway, where the ninth message includes the configuration information of the second secondary gateways.

In one possible embodiment, the configuration information in the ninth message includes BSSIDs corresponding to the second secondary gateways.

In one possible embodiment, the receiving module 1202 is further configured to receive a tenth message sent by the second primary gateway, where the tenth message includes updated configuration information of the second secondary gateways.

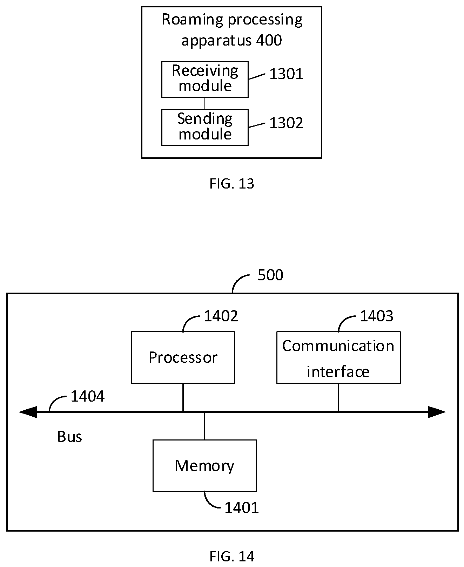

In a case where functional modules are divided to correspond to each function in software, FIG. 13 is a schematic structural diagram of another roaming processing apparatus 400. As shown in FIG. 13, the roaming processing apparatus 400 may include: a receiving module 1301 and a sending module 1302. The roaming processing apparatus 400 may be applied to a second primary gateway in a networking system to perform the roaming processing method performed by the second primary gateway in the above method embodiment.

The receiving module 1301 is configured to receive a first message from a first primary gateway, where the first primary gateway is configured to manage a target first secondary gateway to which a terminal is currently connected, the first message is used to request state information of a target second secondary gateway managed by the second primary gateway, and the target second secondary gateway is a roaming candidate secondary gateway for the terminal.

The sending module 1302 is configured to send a second message to the first primary gateway, where the second message includes the state information of the target second secondary gateway.

In one possible embodiment, the first message includes: identification information of the target second secondary gateway.

In one possible embodiment, the state information of the target second secondary gateway includes at least one of the following: a working channel, an operating class, a band width, the quantity of associated users, a signal-to-noise ratio, or indication information for indicating whether access of new terminals is allowed.

In one possible embodiment, the receiving module 1301 is further configured to receive a third message sent by the first primary gateway, where the third message is used to acknowledge receipt of the second message.

In one possible embodiment, the receiving module 1301 is further configured to receive an eighth message sent by the first primary gateway, where the eighth message is used to request configuration information of second secondary gateways which are managed by the second primary gateway; and the sending module 1302 is further configured to send a ninth message to the first primary gateway, where the ninth message includes the configuration information of the second secondary gateways.

In one possible embodiment, the configuration information in the ninth message includes BSSIDs corresponding to the second secondary gateways.

In one possible embodiment, the sending module 1302 is further configured to send a tenth message to the first primary gateway, where the tenth message includes updated configuration information of the second secondary gateways.

In a case where the functions of the integrated modules described above are implemented in hardware, an embodiment of the present application provides another possible structure of the roaming processing apparatus described in the above embodiments. As shown in FIG. 14, as a communication apparatus, the roaming processing apparatus 500 may include: a processor 1402 and a bus 1404. Optionally, the roaming processing apparatus 500 may further include a memory 1401. Optionally, the roaming processing apparatus 500 may further include a communication interface 1403.

For example, some or all of the functions of the modules such as the sending module 1201, the receiving module 1202, and the determining module 1203 included in the roaming processing apparatus 300 shown in FIG. 12 above may also be implemented by the processor 1402. For another example, some or all of the functions of the modules such as the receiving module 1301 and the sending module 1302 included in the roaming processing apparatus 400 shown in FIG. 13 above may also be implemented by the processor 1402.

The processor 1402 may implement or execute various exemplary logic blocks, modules, and circuits described in conjunction with the embodiments of the present application. The processor 1402 may be a central processing unit, a general-purpose processor, a digital signal processor, an application-specific integrated circuit, a field-programmable gate array, or other programmable logic devices, transistor logic devices, hardware components, or any combination thereof. It may implement or execute various exemplary logic blocks, modules, and circuits described in conjunction with the embodiments of the present application. The processor 1402 may also be a combination that implements computational functions, such as a combination of one or more microprocessors, or a combination of a DSP and a microprocessor.

The communication interface 1403 is used to connect to other devices via a communication network. The communication network may be an Ethernet network, a wireless access network, a wireless local area network (WLAN), or the like.

The memory 1401 may be a read-only memory (ROM) or other types of static storage devices capable of storing static information and instructions; a random access memory (RAM) or other types of dynamic storage devices capable of storing information and instructions; or an electrically erasable programmable read-only memory (EEPROM), disk storage media or other magnetic storage devices, or any other medium capable of carrying or storing desired program codes in the form of instructions or data structures and accessible by a computer, but not limited to these.

As one possible implementation, the memory 1401 may exist independently of the processor 1402; and the memory 1401 may be connected to the processor 1402 via the bus 1404 for storing instructions or program codes. The processor 1402, when calling and executing the instructions or program codes stored in the memory 1401, is able to implement the roaming processing method provided by the embodiments of the present application.

In another possible implementation, the memory 1401 may also be integrated with the processor 1402.

The bus 1404 may be, for example, an extended industry standard architecture (EISA) bus. The bus 1404 may be divided into an address bus, a data bus, a control bus, etc. For simplicity, FIG. 14 depicts the bus as a single thick line; however, this does not imply that there is only one bus or only one type of bus.

Some embodiments of the present application provide a computer-readable storage medium (e.g., a non-transitory computer-readable storage medium). The computer-readable storage medium stores computer program instructions, and the computer program instructions, when running on a computer, cause the computer to perform the roaming processing method according to any one of the above embodiments.

Exemplarily, the computer-readable storage medium described above may include, but is not limited to: magnetic storage devices (e.g., hard disks, floppy disks, or magnetic tapes), optical discs (e.g., compact discs (CDs), digital versatile disks (DVDs), etc.), smart cards, and flash memory devices (e.g., erasable programmable read-only memories (EPROMs), cards, sticks, or key drives, etc.).

Various computer-readable storage media described in the present application may represent one or more devices and/or other machine-readable storage media used to store information.

The term "machine-readable storage medium" may include, but is not limited to, wireless channels and various other media capable of storing, including, and/or carrying instructions and/or data.

An embodiment of the present application provides a computer program product including instructions. The computer program product, when running on a computer, causes the computer to perform the roaming processing method according to any one of the above embodiments.

The foregoing describes only specific implementations of the present application; however, the scope of protection of the present application is not limited thereto. Any changes or substitutions within the scope of the technology disclosed in the present application shall fall within the scope of protection of the present application. Therefore, the scope of protection of the present application shall be subject to the scope of protection of the claims.

## Claims

1. A roaming processing method, performed by a first primary gateway, comprising:
sending a first message to a second primary gateway, the first message is used to request state information of a target second secondary gateway managed by the second primary gateway, and the target second secondary gateway is a roaming candidate secondary gateway for a terminal;
receiving a second message from the second primary gateway, the second message comprises the state information of the target second secondary gateway; and
determining, based on the second message, whether the terminal is allowed to access the target second secondary gateway.

2. The method according to claim 1, wherein the first message comprises: identification information of the target second secondary gateway.

3. The method according to claim 1, wherein the state information of the target second secondary gateway comprises at least one of the following: a working channel, an operating class, a band width, a quantity of associated users, a signal-to-noise ratio, or indication information for indicating whether a new terminal is allowed to access.

4. The method according to claim 1, further comprising:
sending a third message to the second primary gateway, wherein the third message is used to acknowledge receipt of the second message.

5. The method according to claim 1, further comprising:
sending, in a case where the terminal is allowed to access the target second secondary gateway, a fourth message to a target first secondary gateway, wherein the fourth message is used to instruct the terminal to access the target second secondary gateway, and the target first secondary gateway is a secondary gateway connected to the terminal among first secondary gateways managed by the first primary gateway.

6. The method according to claim 1, wherein the target second secondary gateway is a secondary gateway that meets a preset condition among roaming candidate secondary gateways in the vicinity of the terminal, and the preset condition comprises at least one of the following:
a secondary gateway closest to the terminal; or
a secondary gateway having highest channel strength with the terminal.

7. The method according to claim 1, wherein prior to sending the first message to the second primary gateway, the method further comprises:
receiving a fifth message from the terminal through a target first secondary gateway, wherein the fifth message is used to indicate channel strength of secondary gateways in the vicinity of the terminal, and the target first secondary gateway is a secondary gateway connected to the terminal among first secondary gateways managed by the first primary gateway; and
determining, based on the fifth message, a roaming candidate secondary gateway for the terminal from the secondary gateways in the vicinity of the terminal.

8. The method according to claim 7, wherein prior to receiving the fifth message from the terminal through the target first secondary gateway, the method further comprises:
receiving a sixth message from the terminal through the target first secondary gateway, wherein the sixth message is used to indicate channel strength between the terminal and the target first secondary gateway; and
sending, in a case where the channel strength between the terminal and the target first secondary gateway is less than or equal to a first threshold, a seventh message to the terminal through the target first secondary gateway, wherein the seventh message is used to instruct the terminal to measure the channel strength of the secondary gateways in the vicinity of the terminal.

9. The method according to claim 1, further comprising:
sending an eighth message to the second primary gateway, wherein the eighth message is used to request configuration information of second secondary gateways which are managed by the second primary gateway; and
receiving a ninth message from the second primary gateway, wherein the ninth message comprises the configuration information of the second secondary gateways.

10. The method according to claim 9, wherein the configuration information in the ninth message comprises BSSIDs corresponding to the second secondary gateways.

11. The method according to claim 1, further comprising:
receiving a tenth message from the second primary gateway, wherein the tenth message comprises updated configuration information of second secondary gateways.

12. A roaming processing method, performed by a second primary gateway, comprising:
receiving a first message from a first primary gateway, wherein the first primary gateway is configured to manage a target first secondary gateway to which a terminal is currently connected, the first message is used to request state information of a target second secondary gateway managed by the second primary gateway, and the target second secondary gateway is a roaming candidate secondary gateway for the terminal; and
sending a second message to the first primary gateway, wherein the second message comprises the state information of the target second secondary gateway.

13. The method according to claim 12, wherein the first message comprises: identification information of the target second secondary gateway.

14. The method according to claim 12, wherein the state information of the target second secondary gateway comprises at least one of the following: a working channel, an operating class, a band width, a quantity of associated users, a signal-to-noise ratio, or indication information for indicating whether access of new terminals is allowed.

15. The method according to claim 12, further comprising:
receiving a third message from the first primary gateway, wherein the third message is used to acknowledge receipt of the second message.

16. The method according to claim 12, further comprising:
receiving an eighth message from the first primary gateway, wherein the eighth message is used to request configuration information of second secondary gateways which are managed by the second primary gateway; and
sending a ninth message to the first primary gateway, wherein the ninth message comprises the configuration information of the second secondary gateways.

17. The method according to claim 16, wherein the configuration information in the ninth message comprises BSSIDs corresponding to the second secondary gateways.

18. The method according to claim 16, further comprising:
sending a tenth message to the first primary gateway, wherein the tenth message comprises updated configuration information of the second secondary gateways.

19. A communication apparatus, comprising: a memory and a processor, wherein the memory and the processor are coupled; the memory is configured to store instructions executable by the processor; and the processor, when executing the instructions, performs the method according to any one of claims 1 to 11, or the method according to any one of claims 12 to 18.

20. A computer-readable storage medium, storing computer instructions, wherein the computer instructions, when running on a computer, cause a computer to perform the method according to any one of claims 1 to 11, or the method according to any one of claims 12 to 18.
